# NEW EUROPEAN PATENT SPECIFICATION

(11) **EP 1 654 932 B2**
(45) Date of publication and mention of the opposition decision: **14.03.2018**
(45) Mention of the grant of the patent: 24.02.2010
(21) Application number: 05077540.2
(22) Date of filing: 04.11.2005
(51) Int. Cl.: A22C 21/00

(54) **Filleting machine for poultry**
Maschine zum Filetieren von Geflügel
Machine de filetage de volailles

(30) Priority: 05.11.2004 NL 1027426
(43) Date of publication of application: 10.05.2006
(73) Proprietor: Numafa Holding B.V., 3281 NC Numansdorp (NL)
(72) Inventor: Hazenbroek, Jacobus Eliza, 3286 LH Klaaswaal (NL); Barendregt, Gerrit, 3274 CP Heinenoord (NL); Jonkers, Hein, c/o Systemate Group B.V., 3281 NC Numansdorp (NL)
(74) Representative: Van Breda, Jacobus

(56) References cited:
- EP-A- 0 132 890
- EP-A- 0 168 865
- EP-A- 0 207 553
- EP-A1- 0 168 865
- WO-A1-00/22933
- US-A- 4 688 297
- US-A- 4 993 114
- US-A- 5 697 837
- US-A- 5 827 116
- US-A- 5 833 527

## Description

The invention relates to a filleting machine for poultry according to the preamble of claim 1. The invention further relates to a method for filleting poultry according to the preamble of claim 15. Such filleting machines and methods are already known from e.g. document EP-A-0 207 553. Filleting machines for filleting poultry carcass members such as entire breasts and/or breast caps are known. Said machines are provided with a conveyor circulating in a vertical plane on which a series of holders is arranged, each holder being provided with clamping members for clamping the carcass member on the holder. The carcass members are often held horizontally and subsequent to securing them on the holders passed along a first filleting station where the meat is detached from the wishbones. In a second filleting station positioned downstream therefrom so-called tunnel plates detach the meat from the chest and from the coracoids. Subsequently the meat is separated from the keel bone and therewith entirely from the skeleton, in which case so-called whole fillets are obtained. Alternatively a double circular blade may be positioned at the tunnel plates for cutting through the meat and separating the meat along the keel bone, after which, after full separation of the fillets from the skeleton, so-called half fillets are obtained.

It is an object of the invention to provide a filleting machine for filleting poultry carcass members, which machine can be compactly built.

It is an object of the invention to provide a compact filleting machine for filleting poultry breast caps with which so-called half fillets can be obtained.

US-A-4,688,297 discloses a filleting machine according to the preamble of claim 1, which has second cutting edges for detaching meat from the skeleton along the wishbones.

The invention is embodied in a filleting machine, a method and a fillet plate assembly according to the independent claims.

Due to placing the first and second cutting edges in one single filleting station conveyor length is won, as a result of which the machine can be shorter and can sooner be placed in small spaces. The filleting machine can be incorporated in a mobile frame. It is furthermore advantageous that for the filleting treatment an entrance track is gone through only once. Once positioned by the filleting plates the carcass member can also be positioned properly for the second cutting edges.

Preferably the second cutting edges are positioned vertically. The cutting point on the diagonally running wishbones then moves along the cutting edge when passing, which enhances the cutting action.

The second cutting edges are positioned downstream from the first cutting edges, so that they can be simultaneously operative. The tunnel plates then enhance the positioning of the wishbones with respect to the second cutting edges. If the second cutting edges are positioned near the rear end of the filleting plates, the shoulder joints may slightly give way as a result of which a proper cutting contact of the second cutting edges with the wishbones remains ensured.

Depending on the orientation of the holders the second cutting edges may be positioned immediately below or above the filleting plates, as a result of which the operation areas vertically easily connect to each other.

The compactness is further increased when a blade tool is positioned between the filleting plates and the second cutting edges, which blade tool detaches the meat on both sides of the keel bone. The muscle with which the meat is connected to the keel bone is then also cut through.

In an efficient embodiment the blade tool comprises two adjacently placed vertical circular blades, which between them define a passage for the keel bone. The plate forming the connection between the wishbones can also be passed through said passage. The circular blades also cut through the wishbones.

The circular blades with their highest points preferably extend near the rear end of the filleting plates and/or near the upper end of the second cutting edges. The blades then extend between the wishbones and are at the right level for engaging the leading end of the keel bone, without having the cut into the breastbone.

In order the prevent that as a result of the course of the keel bone/breastbone the skeleton is cut through in the middle and the stability is reduced, it is preferred that the conveyor and the blade tool are arranged for moving apart in a vertical plane after the cutting tool has engaged a leading area along the keel bone.

In a further embodiment the filleting plates comprise main plates that are parallel to the plane of circulation and are provided with longitudinal edges that are oriented parallel to the conveyance direction and bend towards each other, which in between them leave a passage open, wherein the longitudinal edges in a first portion situated at the front define a relatively narrow passage and downstream thereof a relatively wide passage, in the entrance to and at the location of the cutting tool. The (boundary of the) narrow passage pushes the wishbones and thus the shoulder joints slightly towards each other, as a result of which the first cutting edges can be properly effective. The widening provides room further down for a spreading motion of the wishbones, as a result of which they arrive properly positioned at the second cutting edges.

For a firm engagement of the first cutting edges onto the chest and adjustment to the contours of the carcass member it may provided that the filleting plates are positioned for counter to spring force being urged away from the path of the holders when contacting the carcass member, in a vertical direction. The filleting plates are then biassed towards the carcass member.

In one embodiment the filleting plates are disposed on a support, which counter to spring tension can be swung about a horizontal axis, in one direction, which axis is perpendicular to the conveyance direction. Preferably the support then has two support members, one for each filleting plate, which in between them leave a space free for the blade tool. In a compact embodiment second cutting edges have been formed at the end of the supports.

For enhancement of the positioning of the leading end of the carcass members, guiding means may have been disposed immediately upstream from the front edge of the filleting plates for guiding the shoulder joints and slightly urging them towards each other. The guiding means may also be adapted for guiding the shoulder joints up to the filleting plates. The shoulder joints are in this case held pressed sideward towards each other within the filleting plates.

Preferably the guiding means are pivotable about axes that are parallel to the conveyance direction and can be adjusted thereto as regards their position, so that the dimensions of the carcasses members to be treated can be adjusted to.

In a compact embodiment of the filleting machine according to the invention the conveyor circulates in a vertical plane having a horizontal lower main track and a horizontal upper main track, wherein the conveyor runs about two turning wheels at both longitudinal ends, at least one of which is driven, wherein the placement station is situated in the upper main track and the filleting station at the end of the lower main track.

If the filleting station is positioned immediately upstream from a turning wheel the said moving apart can easily be effected by turning the holders upwards.

The detaching of the meat from the wishbones takes place downstream from the detaching of the meat from the chest.

The detaching of the meat from the keel bone preferably takes place by means of blades, particularly circular blades, extending on either side of the keel bone.

At the location where the blades cut, the holders can be moved with a directional component relatively away from the blades.

The blades also cut through the wishbones, wherein by means of a part on the holder the wishbones can be kept spaced apart.

Preferably the wishbones are stabilised in a transverse direction by means of a separation member on the holder.

In a particular embodiment the meat is removed in the form of two half fillets.

The various aspects and features described and shown in the specification can be applied, individually, wherever possible. These individual aspects, in particular the aspects and features described as such in the attached dependent claims, can be made subject of divisional patent applications.

The invention will be elucidated on the basis of a number of exemplary embodiments shown in the attached drawings, in which:
Figure 1 shows a schematic front view of an exemplary embodiment of the filleting machine according to the invention;
Figures 2A-C show a side view, a top view and a rear view, respectively, of the filleting station of the filleting machine according to figure 1;
Figure 2D shows a bottom view of a part of the filleting station;
Figure 2E shows a side view of a filleting station according to figure 2A, having guides placed in front of it;
Figures 3A-C show a side view, a detail of the clamping condition and a top view in perspective, respectively, of a holder for the filleting machine according to figure 1; and
Figures 4A-F show successive stages in the operation of the filleting station of the filleting machine of figure 1.

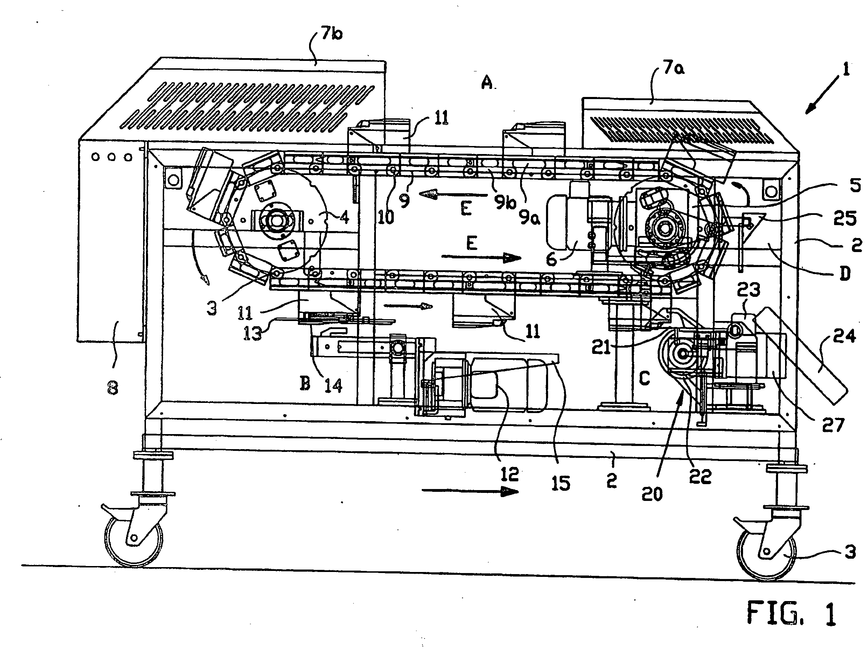

The filleting machine 1 in figure 1 comprises a frame 2 supported on a basis in a mobile manner by wheels 3. A set of turning wheels 4 and 5 has been arranged on the frame 2, of which wheel 5 is rotated by a motor 6. A conveyor 9 circulates in direction E about the wheels 4 and 5 in a vertical plane. The conveyor 9 is constructed in the manner known per se from synthetic blocks 9a,b hinged to each other by steel hinge pins 10. Synthetic holders 11 are attached on the blocks 9a, which holders 11 serve as support for the carcass members to be treated.

An opening has been left free between two caps 7a and 7b placed above the frame 2, in which opening a placement track A is positioned in the upper course, where the carcass members can be manually placed on the holders 11. There is a control box 8 on the left-hand side.

After circulating about wheel 4 the holders reach the lower course of the conveyor 9. At that location they first pass through a skinning station B and subsequently a filleting station C. During the circulation about wheel 5 the holders 11 pass scraping station D, where the skeleton members are removed from the holders 11. In the upper course the holders 11 again arrive at the placement station A and a new cycle may start.

The skinning station B is known per se and comprises guides/tensioners 13 for the carcass members and two skinning rollers 14 driven by motor 12 of which rollers the axes of rotation are horizontally oriented, parallel to the conveyance direction. The skins removed by the skinning rollers 14 are collected in a tray that is not shown.

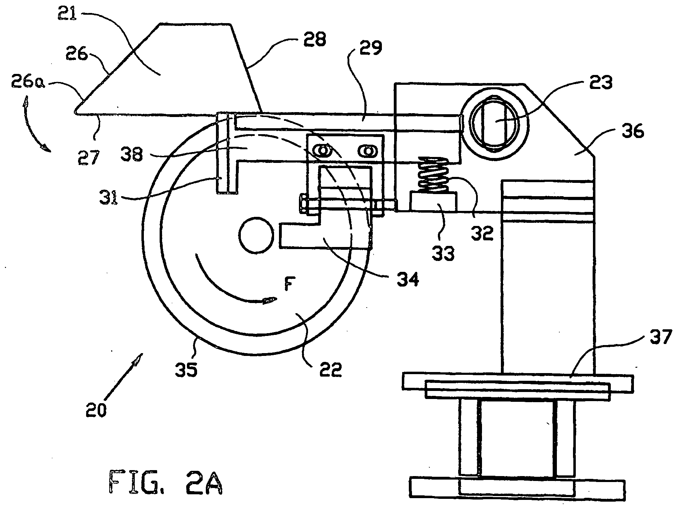

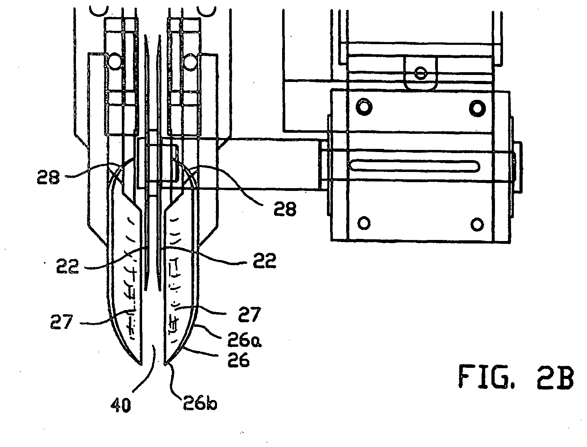

The filleting station C placed near the end of the lower course (also see figures 2A-D) comprises two filleting plates forming a so-called tunnel. The filleting station furthermore comprises two circular blades 22, driven (direction F) by motor 27 about horizontal axes of rotation that are perpendicular to the conveyance direction, which circular blades with their cutting edge 35 extend up to the lower side of the tunnel. The filleting station C furthermore comprises two blades 31 which have been placed at the outside of the circular blades 22.

The discharge station D comprises two stationary, optionally spring-biassed scrapers, which after the attachment of the skeletons on the holders has been released stop the skeleton parts in continuous transport of the holders, so that the skeleton parts fall downwards in order to be collected in discharge chute 24 leading to a collection tray that is not shown.

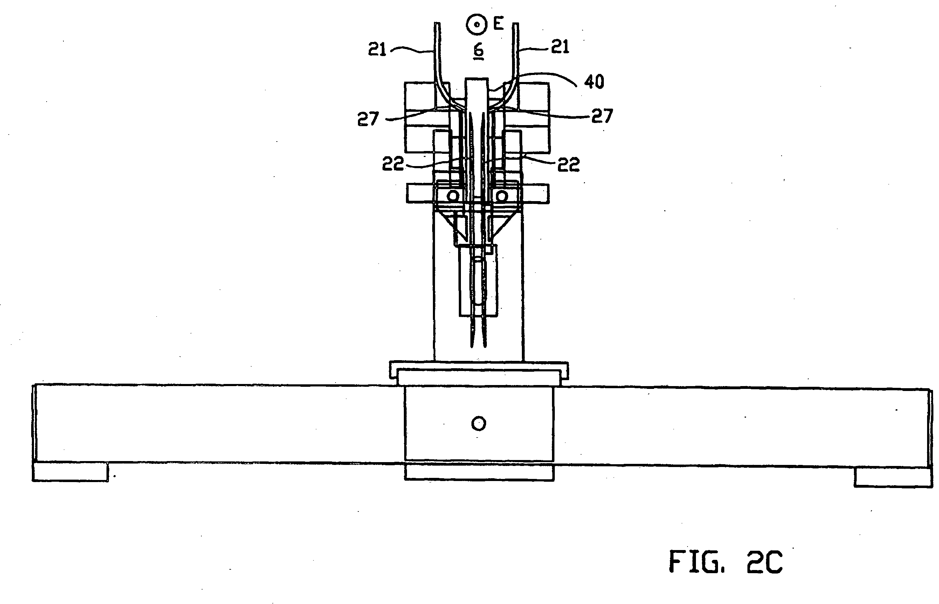

The filleting station C comprises the arrangement 20 shown in figures 2A-D. The two filleting plates 21 are trapezium-shaped in side view, each having a front edge 26, a lower edge 27 and a rear edge 28. As can be seen in the rear view of figure 2C the filleting plates 21 are curved, so that the lower edges 27 face each other and leave a slit 40 open between them. In the front edges 26 a straight part 26a and a curved part 26b can therefore be distinguished. Due to the curved shape a passage G for a carcass member placed on a holder 11 is formed between the filleting plates, which carcass member is conveyed in the direction E.

The filleting plates 21 are each fixedly attached to an outrigger 29, which at the location of the hinge 23 is hinged to a fixed bracket 36 which at the location of 37 is attached to the frame 2. Below the outrigger there is a static support 33, wherein between said support 33 and the outrigger 29 a compression spring 32 is placed. The outrigger 29 and thus the filleting plates 21 therefore can be pressed slightly downward, counter to the spring tension of the compression springs 32, as a result of which a proper contact during filleting is ensured.

The blades 31 are attached on the ends 38 of the outriggers 29 as one fixed unity with the filleting plates 21. The blades 31 are vertically oriented and keep a slit opening free with the circular blades 22. The blades 31 are situated shortly before the diagonal rear edges 28 of the filleting plates 21, and shortly before the highest point of the circular blades 22.

Finally a scraper 34 is shown in figure 2A, with which scraper the surface of the circular blades is cleaned.

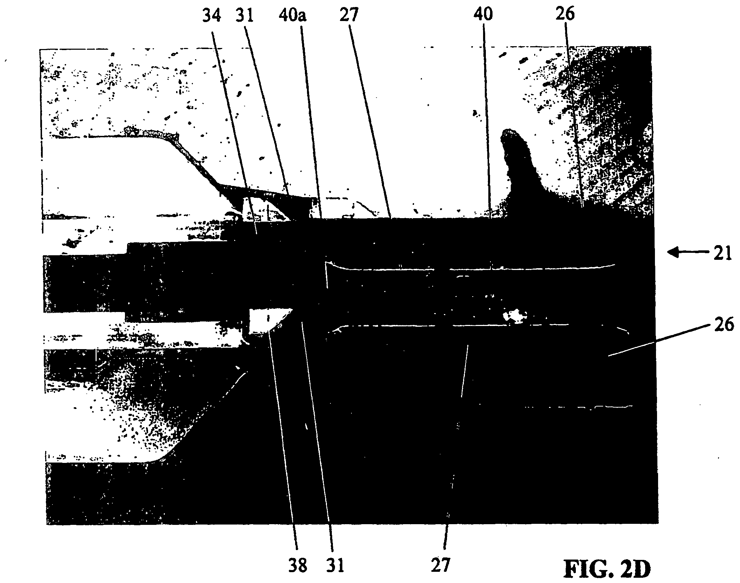

In figure 2D the shape of the filleting plates 21 can clearly be seen, wherein it can be seen that the longitudinal edges 27 leave a slit 40 free over a long distance, and then at the location of 27a widen the slit 40 at 40a, and subsequently connect to the blades 31, which are formed as one unity with the filleting plates 21.

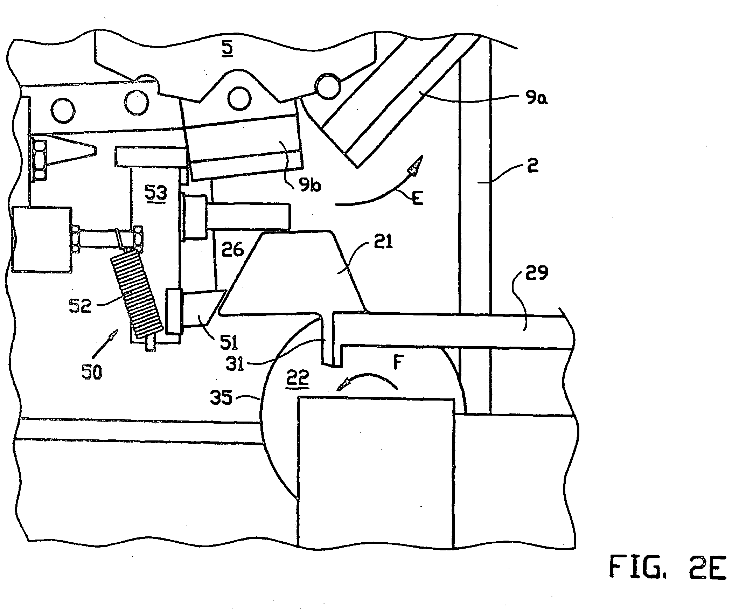

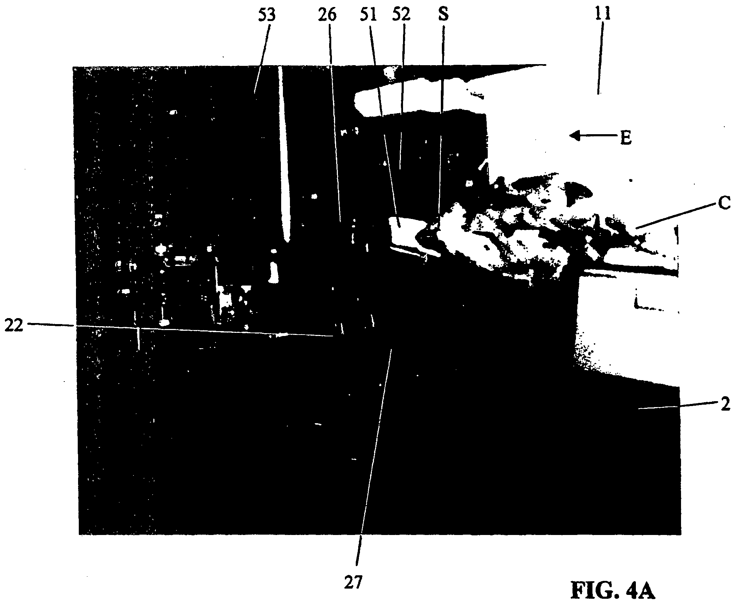

In figure 2E it is shown that immediately upstream from the edges 26 of the filleting plates 21 a guide unit 50 is positioned, having guides 51, positioned on either side of the path E, for the shoulder joints. The guides 51 have an L-shaped cross-section (also see figure 4A) and in conveyance direction slightly ascend for enhancing the connection to the edges 26a,26b. The guides 51 are attached to bars 53 that are pivotable about horizontal axes, wherein the rotation position can be adjusted by abutment against adjustable stops that are not shown, against which the bars are biassed by springs 52.

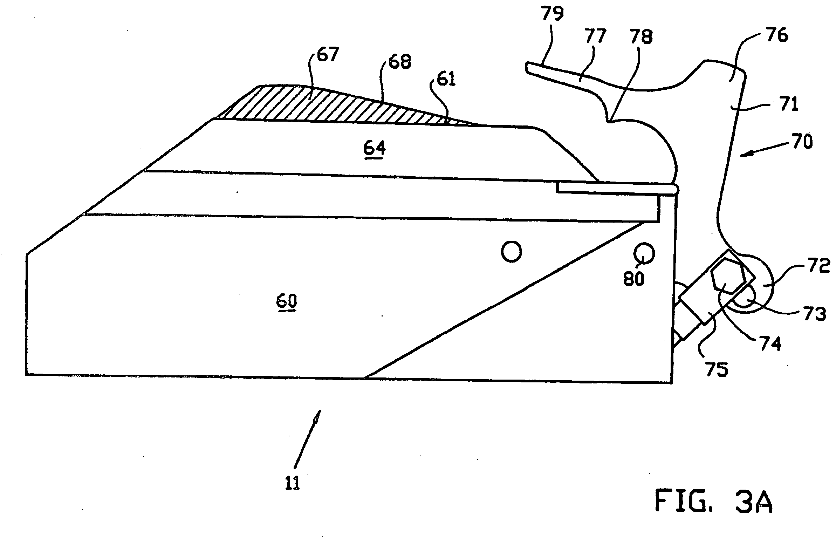

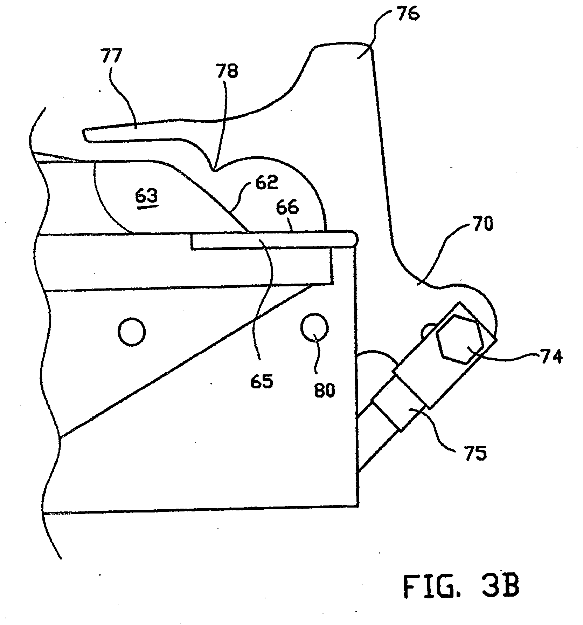

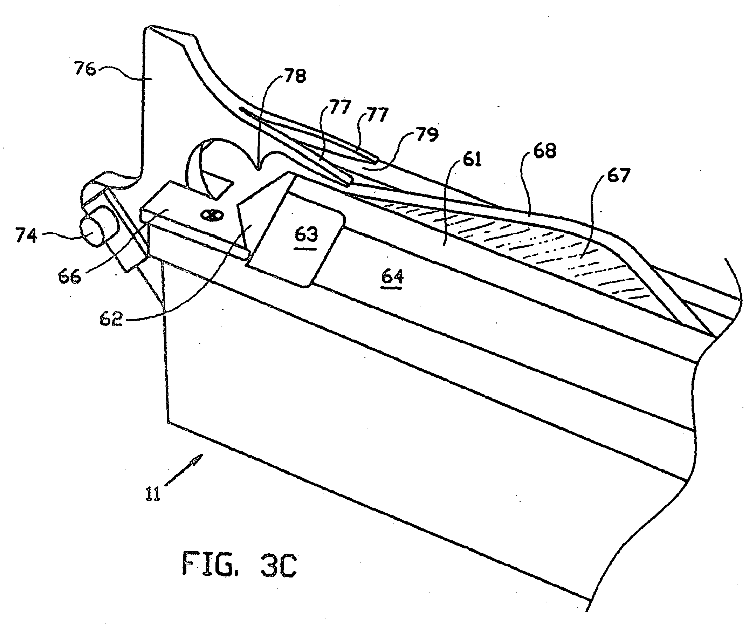

In the figures 3A-C the holder 11 is shown, comprising an elongated synthetic block 60 forming longitudinal support surfaces 64 and 61 and on top provided with a steel fin 67 having support edge 68. At the leading end a recessed area 63 has been formed, having slanted leading surfaces 62 that end on the upper surfaces 66 of horizontal steel support plates 65. At the leading end a steel clamping lever 70 is provided, which comprises a plate 71 which at the location of elongated hole 73 is hingingly attached by means of bolt 74 on an operation bar 75 which with means that are not further shown can be retracted and extended in a manner known per se, compare figures 3A and 3B. The plate 71 is hinged to the block 60 at the location of 80.

At the free end the plate 70 is provided with a fork 77, in between which a slit 79 is left free for receiving the keel bone of a carcass member, so that it is properly held counter to transverse forces.

At the lower side of the fork 77 sharp protrusions 78 have been formed which engage the carcass member where the coracoids meet.

At the top the plate 70 is provided with a projecting plate member 76, with which the wishbones are kept apart and are thus stabilised, so that when they enter the filleting plates they will end up between the blades 31 and the circular blades 22.

After a carcass member, such as a breast cap, has been placed on the holder 11, wherein the lever 70 is in the position of figure 3A, the bar 75 is operated and the plate 70 rotates about hinge 80 to the position shown in figure 3B, in which the carcass member is clamped fixedly on the block 60. The lower side of the breastbone supports on surface 68 of plate 76, which also helps keeping the carcass member centred.

The filleting process will now be described, when the holders 11 with carcasses C have arrived at the filleting arrangement 20.

As can be seen in figure 4A the holders 11 are supplied in the direction E, wherein a carcass member C by means of the clamping mechanism, discussed in figures 3A-C, is clamped fixedly onto the holder. The shoulder joints S here project forward. The shoulder joints S contact guides 51, that ascend diagonally and have a turned lower edge. It can be seen that the guides 51 end just before the beginning of the edges 26 of the filleting plates 21.

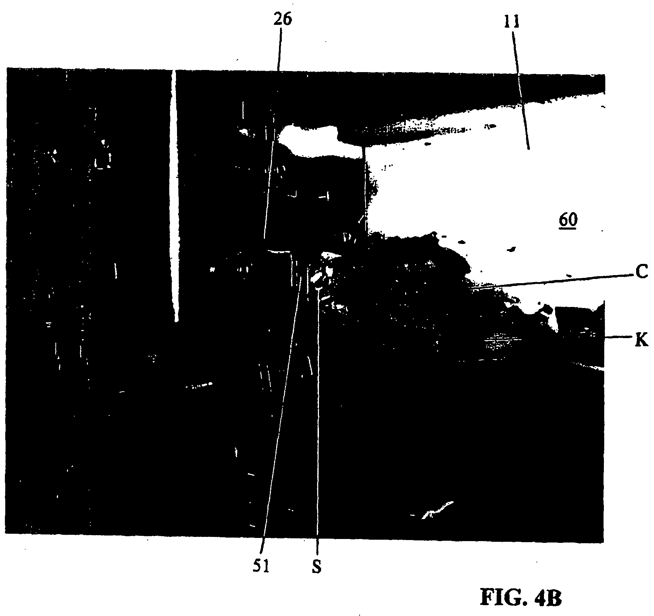

The guide of the shoulder joints S is also shown in figure 4B.

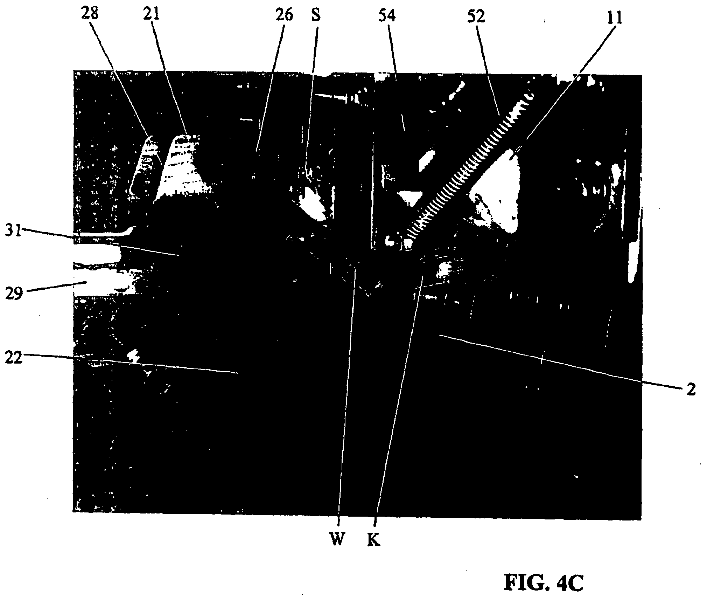

The shoulder joints S subsequently arrive at the front edges 26, as shown in figure 4C. The wishbones W extend below the lower portions of the edges 26 and below the edges 27. They therefore remain outside of the filleting plates 21.

In figure 4C the suspension of the guides 51 from the bar 53 can furthermore be seen, which bar is spring-biassed by a tension spring 52 up to an adjustable stop 54.

The edges 26 will pass along the shoulder joints S, wherein the shoulder joints, that are slightly urged towards each other by the guides 51, remain pressed confined within the filleting plate 21. The front edges 26 will then slide along the portion of the chest connecting to the keel bone, in order to detach the meat. The meat along the coracoids is detached now as well. The shape of the filleting plate 21, tunnel plates, is adapted thereto.

The wishbones W and the keel bone K protrude downward from the carcass C, as a result of the presence of the slit 40 between both filleting plates 21.

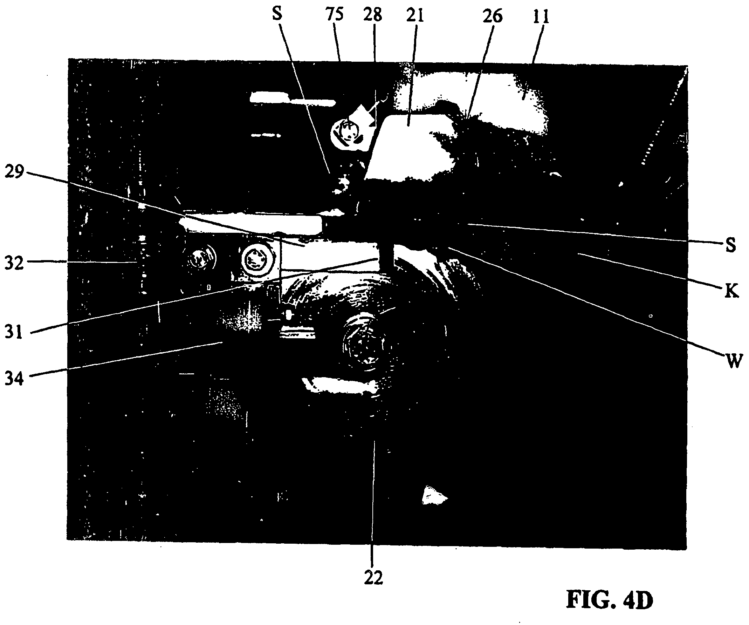

Finally the wishbones W also arrive at the circular blades 22. The plate 76 on the clamping lever of the holder 11 ensures that the wishbones W pass at the outside of the circular blades 22, in order to be properly engaged by the fixed vertical blades 31. Then the shoulder joints S pass by the rear edge 28 (figure 4D), and may slightly give way to the outside, as a result of which the engagement of the blades 31 on the wishbones W is enhanced.

During this process the keel bone K enters the slit space between both circular blades 22. The circular blades 22 cut the meat loose along the keel bone K.

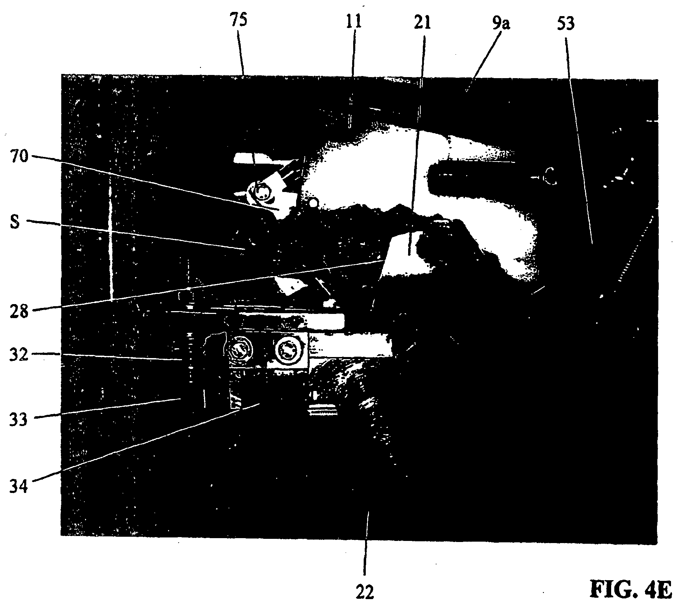

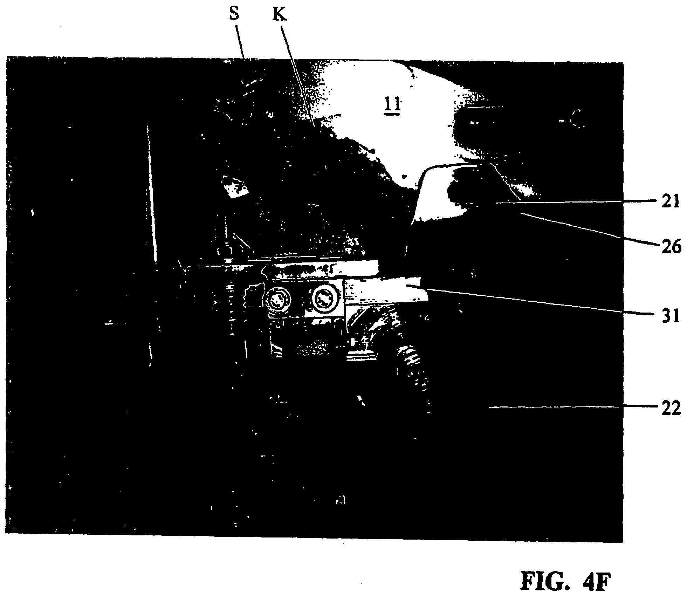

In the next stage, shown in figure 4E, the carcass has largely left the tunnel between the filleting plates 21. Due to the presence of the wheel 5 the holders 11 will move with an upward motion component, due to which it is prevented that the chest is cut through by the circular blades 22, and the carcass C remains attached on the holder 11 in one piece. Moreover the separation of the meat from the skeleton is enhanced. The meat is almost scraped off, and in the situation shown in figure 4F it is entirely scraped off. The fillet meat in form of two half fillets can drop down and be collected in a tray that is not shown.

It is noted that the figures 4A-F for reasons of illustration show a carcass member C that has already been filleted is shown.

## Claims

1. Filleting machine (1) for poultry, comprising a frame (2) and a conveying device (4, 5, 9) arranged thereon, which conveying device comprises an endless conveyor (9) circulating in a plane and a drive for it, on which conveyor a series of vertically placed holders (11) has been arranged on which a carcass member, comprising the breast, such as a breast cap or entire breast, can be secured, wherein the filleting machine (1) furthermore comprises a number of treatment stations (A), such as a placement station where the carcass members are placed on the holders (11), a skinning station (B) where the carcass members are skinned, and a filleting station (C) where the meat in the form of fillets is detached from the skeleton, wherein the conveyor (9) is adapted for conveying the carcass members with the shoulder joints (5) in the lead through the filleting station (C), and a discharge station where the skeleton is taken from the holder (11), wherein the filleting station (C) comprises two, preferably curved, filleting plates (21) for detaching meat from the skeleton, which filleting plates (21) are positioned on both sides of the path (E) of the skeleton in order to each treat one half of the carcass member, **characterised in that** the filleting plates (21) have front edges (26) and rear edges (28), wherein the front edges (26) are provided with a first cutting edge (26) for detaching the meat from the chest, wherein the filleting station (C) is furthermore provided with second cutting edges (31) positioned for detaching the meat from the skeleton along the wishbones (W), wherein the second cutting edges (31) are positioned downstream from the first cutting edges (26), before the rear end (28) of the filleting plates (21).

2. Filleting machine (1) according to claim 1, wherein the second cutting edges (31) are positioned vertically.

3. Filleting machine (1) according to claim 1 or 2, wherein the second cutting edges (31) are positioned immediately below or above the filleting plates (21).

4. Filleting machine (1) according to claim 1-3, wherein a blade tool (22) is positioned between the filleting plates (21) and the second cutting edges (31), which blade tool (22) detaches the meat on both sides of the keel bone (K), wherein, preferably, the blade tool (22) comprises two adjacently placed vertical circular blades (22), which between them define a passage for the keel bone (K), wherein, preferably, the circular blades (22) with their highest points extend near the rear end of the filleting plates (21) and/or near the upper end of the second cutting edges (31), wherein the conveyor and the blade tool (22) are preferably arranged for moving apart in a vertical plane after the blade tool (22) has engaged a leading area along the keel bone (K).

5. Filleting machine (1) according to any one of the preceding claims, wherein the filleting plates (21) comprise main plates (21) that are parallel to the plane of circulation and are provided with longitudinal edges (27) that are oriented parallel to the conveyance direction (E) and bend towards each other, which in between them leave a passage (40) open, wherein the longitudinal edges (27) in a first portion situated at the front define a relatively narrow passage (40) and downstream thereof a relatively wide passage (40a), in the entrance to and at the location of the blade tool (22), wherein, preferably, the filleting plates (21) are positioned for counter to spring force being urged away from the path (E) of the holders (11) when contacting the carcass member, in a vertical direction, and wherein, preferably, the filleting plates (21) are disposed on a support (29), which counter to spring tension can be swung about a horizontal axis, in one direction, which axis is perpendicular to the conveyance direction (E).

6. Filleting machine (1) according to claim 5, wherein the support (29) has two support members (29), one for each filleting plate (21), which in between them leave a space (40) free for a blade tool, wherein, preferably, at the end of the supports (29) second cutting edges (31) have been formed.

7. Filleting machine (1) according to any one of the preceding claims, wherein immediately upstream from the front edge (26) of the filleting plates (21) guiding means (51) have been disposed for guiding the shoulder joints (S) and slightly urging them towards each other, wherein, preferably, the guiding means (51) are also adapted for guiding the shoulder joints (S) up to the filleting plates (21), wherein, preferably, the guiding means (51) are pivotable about axes that are parallel to the conveyance direction (E) and can be adjusted thereto as regards their position.

8. Filleting machine (1) according to any one of the preceding claims, wherein the conveyor (9) circulates in a vertical plane having a horizontal lower main track and a horizontal upper main track, wherein the conveyor (9) runs about two turning wheels (4, 5) at both longitudinal ends, at least one of which is driven, wherein the placement station (A) is situated in the upper main track and the filleting station (C) at the end of the lower main track.

9. Filleting machine (1) according to claims 4 and 8, wherein the filleting station (C) is positioned immediately upstream from a turning wheel (4) and the moving apart is effected by turning the holders (11) upwards.

10. Filleting machine (1) according to any one of the preceding claims, wherein the holders (11) comprise a holder body (60) and means (70) that are moveable by operation with respect thereto for clamping the carcass member against the holder body (60), wherein the clamping means (70) comprise a separation member (76) for keeping the wishbones (W) separated from each other during and after passage through the filleting station (C), wherein, preferably, the holder body (11) has a longitudinal plane of symmetry, the separation member (76) then comprising a plate (76) extending in the longitudinal plane of symmetry.

11. Filleting machine (1) according to claim 10, wherein the clamping means (70) comprises a fork end (77), having fork members (77) capable of engaging on both sides of the keel bone (K), wherein, preferably, the fork members (77) at their side facing the holder body (60) are provided with a protrusion (78), preferably a pointy protrusion (78).

12. Filleting machine (1) according to claim 10 or 11, wherein the clamping means (70) comprise a clamping lever (71, 72) on which the plate (76) can be provided.

13. Filleting machine (1) according to claim 10, 11 or 12, wherein the holder body (11) is provided with a plate member (67) for supporting the inside of the keel bone (K), which plate member (67) projects in the longitudinal plane of symmetry and gradually ascends.

14. Method for filleting carcass members of poultry containing breast meat, particularly breast caps, wherein the carcass members are placed on holders (11) that have been disposed one after the other on a conveyor (9) driven so as to circulate in a vertical plane, wherein the holders (11) with carcass members are passed through a skinning station (B) for removing the skin, wherein the carcass members are subsequently, in a lower track of the circulating path (E), passed through a filleting station (C), **characterised in that** at the filleting station by means of cutting edges (26, 31) the meat is detached from the chest, the wishbones (W) and the coracoids, as well as separated on both sides of the keel bone (K), wherein the detaching of the meat from the wishbones (W) takes place downstream from the detaching of the meat from the chest, wherein the cutting edge (31) for detaching meat from the wishbones (W) is between front and rear edges (26, 28) of filleting plates (21) for detaching meat from the chest.

15. Method according to claim 14, wherein the detaching of the meat from the keel bone (K) takes place by means of blades (22), particularly circular blades (22), extending on either side of the keel bone (K), wherein, preferably, at the location where the blades (22) cut, the holders (11) are moved relatively away from the blades (22), wherein, preferably, the blades (22) also cut through the wishbones (W), wherein by means of a part (76) on the holder (11) the wishbones (W) are kept spaced apart.

16. Method according to claim 14 or 15, wherein by means of a separation member (76) on the holder (11) the wishbones (W) are stabilised in a transverse direction towards each other.

17. Method according to any one of the claims 14-16, wherein the meat is removed in the form of two half fillets.

18. Fillet plate assembly (21, 29) for poultry, **characterised in that** the assembly (21, 29) is provided with filleting plates (21) having front edges (26) and rear edges (28), and wherein said front edges (26) are embodied as first cutting edges (26) for cutting meat loose along the chest and **in that** it has second cutting edges (31) for cutting meat loose along the wishbones (W), on both sides of a carcass member, particularly the breast cap, which second cutting edges (31) are positioned between the first cutting edges (26) and the rear edges (28) of the filleting plates (21).

## Patentansprüche

1. Filetiermaschine (1) für Geflügel, umfassend einen Rahmen (2) und eine daran angeordnete Fördervorrichtung (4, 5, 9), welche Fördervorrichtung einen in einer Ebene umlaufenden Endlosförderer (9) und einen Antrieb dafür umfasst, an welchem Förderer eine Reihe von vertikal platzierten Haltern (11) angeordnet worden ist, an welchen ein Tierkörper-Element, welches eine Brust, wie etwa eine Brustkappe oder eine gesamte Brust, umfasst, gesichert werden kann, wobei die Filetiermaschine (1) ferner eine Anzahl von Behandlungsstationen (A) umfasst, wie etwa eine Platzierstation, wo die Tierkörper-Elemente an den Haltern (11) platziert werden, eine Häutungsstation (B), wo die Tierkörper-Elemente gehäutet werden, und eine Filetierstation (C), wo das Fleisch in der Form von Filets von dem Gerippe gelöst wird, wobei der Förderer (9) angepasst ist, die Tierkörper-Elemente mit Schultergelenken (S) voraus durch die Filetierstation (C) zu führen, und eine Austragstation, wo das Gerippe von dem Halter (11) genommen wird, wobei die Filetierstation (C) zwei, vorzugsweise gekrümmte, Filetierplatten (21) zum Ablösen von Fleisch von dem Gerippe umfasst, welche Filetier-platten (21) an beiden Seiten des Pfades (E) des Gerippes positioniert sind, um je eine Hälfte das Tierkörper-Elements zu behandeln, **dadurch gekennzeichnet, dass** die Filetierplatten (21) Frontkanten (26) und Hinterkanten (28) aufweisen, wobei die Frontkanten (26) mit einer ersten Schnittkante (26) zum Ablösen des Fleisches von dem Brustkorb versehen sind, wobei die Filetierstation (C) ferner mit zweiten Schnittkanten (31) versehen ist, die positioniert sind, um das Fleisch von dem Gerippe entlang der Gabelbeine (W) abzulösen, wobei die zweiten Schnittkanten (31) stromabwärts von den ersten Schnittkanten (26) vor dem hinteren Ende (28) der Filetierplatten (21) positioniert sind.

2. Filetiermaschine (1) nach Anspruch 1, wobei die zweiten Schnittkanten (31) vertikal positioniert sind.

3. Filetiermaschine (1) nach Anspruch 1 oder 2, wobei die zweiten Schnittkanten (31) unmittelbar unter oder über den Filetierplatten (21) positioniert sind.

4. Filetiermaschine (1) nach einem der Ansprüche 1 - 3, wobei ein Klingenwerkzeug (22) zwischen den Filetierplatten (21) und den zweiten Schnittkanten (31) positioniert ist, welches Klingenwerkzeug (22) das Fleisch an beiden Seiten des Brustbeins (K) ablöst, wobei vorzugsweise das Klingenwerkzeug (22) zwei benachbart angeordnete vertikale kreisrunde Klingen (22) umfasst, welche zwischen sich einen Durchlass für das Brustbein (K) definieren, wobei sich vorzugsweise die kreisrunden Klingen (22) mit ihren höchsten Punkten nahe des hinteren Endes der Filetierplatten (21) oder/und nahe dem oberen Ende der zweiten Schnittkanten (31) erstrecken, wobei der Förderer und das Klingenwerkzeug (22) vorzugsweise angeordnet sind, um sich in einer vertikalen Ebene auseinander zu bewegen, nachdem das Klingenwerkzeug (22) mit einem vorauslaufenden Bereich entlang des Brustbeins (K) in Eingriff gelangt ist.

5. Filetiermaschine (1) nach einem der vorhergehenden Ansprüche, wobei die Filetierplatten (21) Hauptplatten (21) umfassen, die zu der Umlaufebene parallel sind und mit Längskanten (27) bereitgestellt sind, welche parallel zu der Förderrichtung (E) orientiert sind und zueinander hin gebogen sind, welche zwischen sich einen Durchlass (40) offen lassen, wobei die Längskanten (27) in einem ersten Abschnitt, der an der Vorderseite angeordnet ist, einen relativ engen Durchlass (40) und stromabwärts davon einen relativ breiten Durchlass (40a) in dem Eingang zu und dem Ort des Klingenwerkzeugs (22) definieren, wobei vorzugsweise die Filetierplatten (21) positioniert sind, um entgegen einer Federkraft von dem Pfad (E) der Halter (11) in eine vertikale Richtung weggedrängt zu werden, wenn sie mit dem Tierkörper-Element in Kontakt kommen, und wobei vorzugsweise die Filetierplatten (21) an einer Lagerung (29) angeordnet sind, welche entgegen einer Federspannung um eine horizontale Achse in eine Richtung geschwungen werden kann, welche Achse senkrecht zu der Förderrichtung (E) ist.

6. Filetiermaschine (1) nach Anspruch 5, wobei die Lagerung (29) zwei Lager-Elemente (29) aufweist, eine für jede Filetierplatte (21), welche zwischen sich einen Raum (40) frei lassen für das Klingenwerkzeug, wobei vorzugsweise an dem Ende der Lagerungen (29) zweite Schnittkanten (31) gebildet worden sind.

7. Filetiermaschine (1) nach einem der vorhergehenden Ansprüche, wobei unmittelbar stromaufwärts von der Vorderkante (26) der Filetierplatten (21) Führungsmittel (51) angeordnet worden sind, um die Schultergelenke (S) zu führen und um sie leicht zueinander hin zu drängen, wobei vorzugsweise die Führungsmittel (51) auch geeignet sind, die Schultergelenke (S) auf die Filetierplatten (21) zu führen, wobei vorzugsweise die Führungsmittel (51) schwenkbar um Achsen sind, welche parallel zu der Förderrichtung (E) sind und welche dazu hinsichtlich ihrer Position eingestellt werden können.

8. Filetiermaschine (1) nach einem der vorhergehenden Ansprüche, wobei der Förderer (9) in einer vertikalen Ebene umläuft, wobei er eine horizontale untere Hauptspur und eine horizontale obere Hauptspur aufweist, wobei der Förderer (9) um zwei Drehräder (4, 5) an beiden Längsenden umläuft, von denen wenigstens eines angetrieben ist, wobei die Platzierstation (A) in der oberen Hauptspur und die Filetierstation (C) am Ende der unteren Hauptspur angeordnet sind.

9. Filetiermaschine (1) nach Anspruch 4 und 8, wobei die Filetierstation (C) unmittelbar stromaufwärts von einem Drehrad (4) positioniert ist und wobei das Auseinanderbewegen durch Drehen der Halter (11) nach oben bewirkt wird.

10. Filetiermaschine (1) nach einem der vorhergehenden Ansprüche, wobei die Halter (11) einen Halterkörper (60) und Mittel (70) umfassen, die durch Betrieb bezüglicher dieser beweglich sind, um das Tierkörper-Element gegen den Halterkörper (60) zu klemmen, wobei die Klemmmittel (70) ein Trenn-Element (76) umfassen, um die Gabelbeine (W) voneinander während und nach dem Durchlauf durch die Filetierstation (C) getrennt zu halten, wobei vor-zugsweise der Halterkörper (11) eine Symmetrie-Längsebene aufweist, wobei das Trenn-Element (76) dann eine Platte (76) umfasst, die sich in der Symmetrie-Längsebene erstreckt.

11. Filetiermaschine (1) nach Anspruch 10, wobei die Klemmmittel (70) ein Gabelende (77) umfassen, welches Gabel-Elemente (77) aufweist, die geeignet sind, an beiden Seiten des Brustbeins (K) in Eingriff zu kommen, wobei vorzugsweise die Gabel-Elemente (77) an ihrer dem Halterkörper (60) zugewandten Seite mit einem Vorsprung (78), vorzugsweise mit einem spitzen Vorsprung (78), bereitgestellt sind.

12. Filetiermaschine (1) nach Anspruch 10 oder 11, wobei die Klemmmittel (70) einen Klemmhebel (71, 72) umfassen, an welchem die Platte (76) bereitgestellt werden kann.

13. Filetiermaschine (1) nach Anspruch 10, 11 oder 12, wobei der Halterkörper (11) mit einem Platten-Element (67) zum Unterstützen des Inneren des Brustbeins (K) bereitgestellt ist, welches Plattenelement (67) sich in der Symmetrie-Längsebene erstreckt und fortschreitend ansteigt.

14. Verfahren zum Filetieren von Tierkörper-Elementen von Brustfleisch, insbesondere Brustkappen, umfassenden Geflügel, wobei die Tierkörper-Elemente an Haltern (11) platziert werden, die einer nach dem anderen auf einem Förderer (9) angeordnet worden sind, welcher angetrieben wird, um in einer vertikalen Ebene umzulaufen, wobei die Halter (11) mit den Tierkörper-Elementen durch eine Häutungsstation (B) zum Entfernen der Haut geführt werden, wobei die Tierkörper-Elemente danach in einer unteren Spur der Umlaufbahn (E) durch eine Filetierstation (C) geführt werden, **dadurch gekennzeichnet, dass** bei der Filetierstation vermittels von Schnittkanten (26, 31) das Fleisch von dem Brustkorb, von dem Gabelbein (W) und den Coracoiden gelöst wird, als auch an beiden Seiten von dem Brustbein (K),
wobei das Lösen von dem Fleisch von den Gabelbeinen (W) stromabwärts von dem Lösen des Fleisches von dem Brustkorb stattfindet,
wobei die Schnittkante (31) zum Lösen von Fleisch von den Gabelbeinen (W) zwischen Front- und Hinterkanten (26, 28) von Filetierplatten (21) zum Lösen von Fleisch von der Brust ist.

15. Verfahren nach Anspruch 14, wobei das Lösen des Fleisches von dem Brustbein (K) vermittels von Klingen (22) stattfindet, insbesondere kreisrunden Klingen (22), die sich an beiden Seiten des Brustbeins (K) erstrecken, wobei vorzugsweise an der Stelle, wo die Klingen (22) schneiden, die Halter (11) relativ von den Klingen (22) weg bewegt werden, wobei vorzugsweise die Klingen (22) auch durch die Gabelbeine (W) schneiden, wobei vermittels eines Teils (76) an dem Halter (11) die Gabelbeine (W) voneinander weg gehalten werden.

16. Verfahren nach Anspruch 14 oder 15, wobei vermittels von einem Trenn-Element (76) an dem Halter (11) die Gabelbeine (W) in einer Querrichtung zueinander hin stabilisiert werden.

17. Verfahren nach einem der Ansprüche 14 - 16, wobei das Fleisch in der Form von zwei halben Filets entfernt wird.

18. Filetplattenanordnung (21, 29) für Geflügel, **dadurch gekennzeichnet, dass** die Anordnung (21, 29) mit Filetierplatten (21) bereitgestellt ist, die Frontkanten (26) und Hinterkanten (28) aufweisen, und wobei die Frontkanten (26) als erste Schnittklingen (26) zum Losschneiden von Fleisch entlang des Brustkorbs realisiert sind, und dadurch, dass sie zweite Schnittklingen (31) zum Losschneiden von Fleisch entlang der Gabelbeine (W) an beiden Seiten des Tierkörper-Elements, insbesondere der Brustkappe, aufweist, welche zweiten Schnittkanten (31) zwischen den ersten Schnittkanten (26) und den Hinterkanten (28) der Filetierplatten (21) positioniert sind.

## Revendications

1. Machine de filetage (1) pour volailles, comprenant un cadre (2) et un transporteur (4, 5, 9) disposé sur celui-ci, ledit transporteur comprenant un transporteur continu (9) circulant dans un plan et un dispositif de commande, sur ledit transporteur étant agencés une série de supports (11) placés à la verticale sur lesquels peut être fixé un élément de carcasse, comprenant le blanc, comme un morceau de blanc ou le blanc entier, ladite machine de filetage (1) comprenant en outre un certain nombre de postes de traitement (A), tels qu'un poste de mise en place où les éléments de carcasse sont placés sur les supports (11), un poste de dépeçage (B) où les éléments de carcasse sont dépecés, et un poste de filetage (C) où la viande sous forme de filets est détachée du squelette, dans laquelle le transporteur (9) est conçu pour transporter les éléments de carcasse avec les articulations (S) à travers le poste de filetage (C), et un poste d'évacuation où le squelette est retiré du support (11), dans laquelle le poste de filetage (C) comprend deux plaques de filetage (21), de préférence incurvées, destinées à détacher la viande du squelette, lesdites plaques de filetage (21) étant positionnées des deux côtés du chemin (E) du squelette afin que chacune traite une moitié de l'élément de carcasse, **caractérisée en ce que** les plaques de filetage (21) comportent des bords avant (26) et des bords arrière (28), où les bords avant (26) sont dotés d'un premier bord de découpe (26) servant à détacher la viande de la poitrine, dans laquelle le poste de filetage (C) est en outre doté de seconds bords de découpe (31) positionnés pour détacher la viande du squelette le long des bréchets (W), dans laquelle les seconds bords de découpe (31) sont positionnés en aval des premiers bords de découpe (26), avant l'extrémité arrière (28) des plaques de filetage (21).

2. Machine de filetage (1) selon la revendication 1, dans laquelle les seconds bords de découpe (31) sont positionnés à la verticale.

3. Machine de filetage (1) selon la revendication 1 ou 2, dans laquelle les seconds bords de découpe (31) sont positionnés juste en dessous ou au-dessus des plaques de filetage (21).

4. Machine de filetage (1) selon la revendication 1-3, dans laquelle un outil à lames (22) est positionné entre les plaques de filetage (21) et les seconds bords de découpe (31), ledit outil à lames (22) détache la viande des deux côtés de l'os ventral (K), dans laquelle, de préférence, l'outil à lames (22) comprend deux lames (22) circulaires verticales placées de manière adjacentes, qui définissent entre elles un passage pour l'os ventral (K), dans laquelle, de préférence, les lames circulaires (22) avec leurs points les plus élevés s'étendent près de l'extrémité arrière des plaques de filetage (21) et/ou près de l'extrémité supérieure des seconds bords de découpe (31), dans laquelle le transporteur et l'outil à lames (22) sont de préférence conçus pour s'éloigner dans un plan vertical une fois que l'outil à lames (22) a mis en prise une zone d'attache le long de l'os ventral (K).

5. Machine de filetage (1) selon l'une quelconque des revendications précédentes, dans laquelle les plaques de filetage (21) comprennent des plaques principales (21) qui sont parallèles au plan de circulation et sont dotées de bords longitudinaux (27) qui sont orientés parallèlement à la direction de transport (E) et se plient l'un vers l'autre, lesquels laissent entre eux un passage (40) ouvert, dans laquelle les bords longitudinaux (27) dans une première partie située à l'avant définissent un passage relativement étroit (40) et en aval de celui-ci un passage relativement large (40a), à l'entrée de l'outil à lames (22) et à l'emplacement de celui-ci, dans laquelle, de préférence, les plaques de filetage (21) sont positionnées pour être poussées, à l'encontre d'une force de rappel, loin du chemin (E) des supports (11) lors d'une d'entrée en contact avec l'élément de carcasse, dans une direction verticale, et dans laquelle, de préférence, les plaques de filetage (21) sont disposées sur un support (29), qui à l'encontre d'une tension de ressort, peut osciller autour d'un axe horizontal, dans une direction, ledit axe étant perpendiculaire à la direction de transport (E).

6. Machine de filetage (1) selon la revendication 5, dans laquelle le support (29) comporte deux éléments de support (29), un pour chaque plaque de filetage (21), qui laissent entre eux un espace (40) libre pour un outil à lames, dans laquelle, de préférence, à l'extrémité des supports (29) ont été formés des seconds bords de découpe (31).

7. Machine de filetage (1) selon l'une quelconque des revendications précédentes, dans laquelle juste en amont du bord avant (26) des plaques de filetage (21) a été disposé un moyen de guidage (51) pour guider les articulations (S) et les rapprocher légèrement les unes des autres, dans laquelle, de préférence, le moyen de guidage (51) est également conçu pour guider les articulations (S) jusqu'aux plaques de filetage (21), dans laquelle, de préférence, le moyen de guidage (51) peut pivoter autour d'axes qui sont parallèles à la direction de transport (E) et sa position peut être ajustée par rapport à ces derniers.

8. Machine de filetage (1) selon l'une quelconque des revendications précédentes, dans laquelle le transporteur (9) circule dans un plan vertical ayant une voie principale inférieure horizontale et une voie principale supérieure horizontale, dans laquelle le transporteur (9) se déplace autour de deux roues rotatives (4, 5) sur les deux extrémités longitudinales, dont au moins une est entraînée, dans laquelle le poste de mise en place (A) est situé dans la voie principale supérieure et le poste de filetage (C) à l'extrémité de la voie principale inférieure.

9. Machine de filetage (1) selon les revendications 4 et 8, dans laquelle le poste de filetage (C) est positionné juste en amont d'une roue rotative (4) et l'éloignement est effectué en faisant tourner les supports (11) vers le haut.

10. Machine de filetage (1) selon l'une quelconque des revendications précédentes, dans laquelle les supports (11) comprennent un corps de support (60) et un moyen (70) qui peut se déplacer par actionnement par rapport à ce dernier pour serrer l'élément de carcasse contre le corps de support (60), dans laquelle le moyen de serrage (70) comprend un élément de séparation (76) pour maintenir les bréchets (W) séparés les uns des autres pendant et après leur passage à travers le poste de filetage (C), dans laquelle, de préférence, le corps de support (11) comporte un plan de symétrie longitudinal, l'élément de séparation (76) comprenant ensuite une plaque (76) s'étendant dans le plan de symétrie longitudinal.

11. Machine de filetage (1) selon la revendication 10, dans laquelle le moyen de serrage (70) comprend une extrémité de fourche (77), comportant des éléments de fourche (77) pouvant venir en prise sur les deux côtés de l'os ventral (K), dans laquelle, de préférence, les éléments de fourche (77), sur leur côté opposé au corps de support (60), sont dotés d'une saillie (78), de préférence une saillie pointue (78).

12. Machine de filetage (1) selon la revendication 10 ou 11, dans laquelle le moyen de serrage (70) comprend un levier de serrage (71, 72) sur lequel peut être disposée la plaque (76).

13. Machine de filetage (1) selon la revendication 10, 11, ou 12, dans laquelle le corps de support (11) est doté d'un élément de plaque (67) servant à soutenir l'intérieur de l'os ventral (K), ledit élément de plaque (67) faisant saillie dans le plan de symétrie longitudinal et s'élevant progressivement.

14. Procédé de filetage d'éléments de carcasse de volaille contenant de la viande de blanc, en particulier des morceaux de blanc, dans lequel les éléments de carcasse sont placés sur des supports (11) qui ont été disposés les uns après les autres sur un transporteur (9) entraîné de manière à circuler dans un plan vertical, dans lequel les supports (11) avec les éléments de carcasse traversent un poste de dépeçage (B) pour retirer la peau, dans lequel les éléments de carcasse sont ensuite, dans une voie inférieure du chemin de circulation (E), passés à travers un poste de filetage (C), **caractérisé en ce que**, au poste de filetage, à l'aide de bords de découpe (26, 31), la viande est détachée de la poitrine, les bréchets (W) et les coracoïdes, sont également séparés des deux côtés de l'os ventral (K),
dans lequel le détachement de la viande des bréchets (W) a lieu en aval du détachement de la viande de la poitrine, dans lequel le bord de découpe (31) pour détacher la viande des bréchets (W) est situé entre des bords avant (26, 28) de plaques de filetage (21) pour détacher la viande de la poitrine.

15. Procédé selon la revendication 14, dans lequel le détachement de la viande de l'os ventral (K) a lieu grâce à des lames (22), en particulier des lames circulaires (22) s'étendant sur l'un des côtés de l'os ventral (K), dans lequel, de préférence, à l'emplacement où les lames (22) découpent, les supports (11) sont déplacés relativement loin des lames (22), dans lequel, de préférence, les lames (22) découpent également les bréchets (W), dans lequel à l'aide d'une partie (76) située sur le support (11), les bréchets (W) sont maintenus espacés.

16. Procédé selon la revendication 14, ou 15, dans lequel à l'aide d'un élément de séparation (76) situé sur le support (11), les bréchets (W) sont stabilisés dans une direction transversale les uns vers les autres.

17. Procédé selon l'une quelconque des revendications 14-16, dans lequel la viande est retirée sous la forme de filets en deux moitiés.

18. Ensemble de plaque de filetage (21, 29) pour volailles, **caractérisé en ce que** l'ensemble (21, 29) est doté de plaques de filetage (21) ayant des bords avant (26) et des bords arrière (28), et dans lequel lesdits bords avant (26) sont incorporés en tant que premiers bords de découpe (26) pour découper la viande se détachant le long de la poitrine et **en ce qu'**il comporte des seconds bords de découpe (31) pour découper la viande se détachant le long des bréchets (W), des deux côtés d'un élément de carcasse, en particulier le morceau de blanc, lesdits seconds bords de découpe (31) sont positionnés entre les premiers bords de découpe (26) et les bords arrière (28) des plaques de filetage (21).
